# EUROPEAN PATENT SPECIFICATION

(11) **EP 4 042 213 B1**
(45) Date of publication and mention of the grant of the patent: **15.01.2025**
(21) Application number: 20936002.3
(22) Date of filing: 14.05.2020
(51) Int. Cl.: G02B 5/30, G02B 27/28, G02B 23/04, G02B 27/14, G01B 9/06

(54) **POLARIZING OPTICAL SEPARATOR FOR STELLAR INTENSITY INTERFEROMETRY**
POLARISIERENDER OPTISCHER SEPARATOR FÜR STELLARE INTENSITÄTSINTERFEROMETRIE
SÉPARATEUR OPTIQUE POLARISANT POUR INTERFÉROMÉTRIE D'INTENSITÉ STELLAIRE

(43) Date of publication of application: 17.08.2022
(73) Proprietor: Univerzita Palackého v Olomouci, 771 47 Olomouc (CZ); Université de Genève, 1211 Genève 4 (CH)
(72) Inventor: PECH, Miroslav, 783 53 Velká Bystrice (CZ); MONTARULI, Teresa, 1212 Grand-Lancy (CH); BARBANO, Anastasia, 1205 Genève (CH); HRABOVSKÝ, Miroslav, 779 00 Olomouc (CZ); SCHOVÁNEK, Petr, 751 31 Lipník nad Becvou (CZ); MANDÁT, Dusan, 751 05 Kokory 82 (CZ); VACULA, Martin, 746 01 Opava (CZ); MICHAL, Stanislav, 750 00 Prerov (CZ); PALATKA, Miroslav, 783 01 Olomouc - Nemilany (CZ)
(74) Representative: Dadej, Leopold
(86) International application number: PCT/CZ2020/000016
(87) International publication number: WO 2021/228287

(56) References cited:
- WO-A1-2019/028078
- JP-A- 2017 049 486
- US-A- 5 828 489
- US-A1- 2010 202 724
- NOLAN MATTHEWS ET AL: "Development of a Digital Astronomical Intensity Interferometer: laboratory tests with thermal light", ARXIV.ORG, CORNELL UNIVERSITY LIBRARY, 201 OLIN LIBRARY CORNELL UNIVERSITY ITHACA, NY 14853, 18 August 2017 (2017-08-18), XP080953573, DOI: 10.1080/09500340.2017.1360958
- DAVE KIEDA ET AL: "Stellar Intensity Interferometric Capabilities of IACT Arrays", ARXIV.ORG, CORNELL UNIVERSITY LIBRARY, 201 OLIN LIBRARY CORNELL UNIVERSITY ITHACA, NY 14853, 12 September 2017 (2017-09-12), XP081293839

## Description

### Field of technology

The invention relates to the design of a compact polarizing optical separator for stellar intensity interferometry, intended especially for use in an atmospheric Cherenkov detector to determine boson correlation in an incoherent source of light.

### State-of-the-art

Using the Cherenkov telescope arrays [https://arxiv.org/abs/1610.01867], stellar Intensity interferometry (SII) can improve by at least increase the order of magnitude the spatial resolution in optical astronomy [https://arxiv.org/abs/1207.0808v1, https://arxiv.org/abs/1009.5815] enabling the spatial resolution to observe star discs and binary stars, and better understand their dynamics. Aside for enabling the possibility to observe the inner structure of stars, the passage of an exoplanet through the star discs and/or the displaying of fast-moving stars with structures in their circular discs could become possible. The intensity interferometry connects binoculars only electronically and is practically insensitive to atmospheric turbulences and optical imperfections. The telescopes planned to populate the CTA (Cherenkov Telescope Array) observatory sites [https://arxiv.org/abs/1907.08530] will have large mutual distances between 100-250 m covering up to some km^2 of surface. The telescopes measure the development of atmospheric showers in the atmosphere by detecting the Cherenkov light, dominantly in the UV and blue band. emitted by ultra-relativistic charged particles. Light is collected large mirror surfaces of diameter between 4 and 24 m on cameras with very fast photodetectors (< ns). From the shower images on the camera the particle originating them can be recognised, gamma-rays or cosmic rays, dominated by protons. Image data can be analysed electronically and with the help of software gamma-ray source images can be reconstructed. These observations can be made during clear nights.

Stellar intensity interferometry (SII) can be performed using external devices or devices, such the one presented here, which can also be inserted inside camera pixels. Any experiment needs to recognise single photons and their arrival time to verify their correlation.

Several projects have been presented in the domain of Cherenkov experiments on SII, mostly using as photosensors photomultipliers. For instance, the VERITAS project (https://arxiv.org/abs/astro-ph/0302610,https://arxiv.org/abs/1908.03095, https://arxiv.org/abs/1709.03956) uses a special board mounted on the front of the camera, with a 45-degree mirror and a photomultiplier reading the signal. The project uses two photomultipliers with polarizing beam splitters, where each beam splitter has a different optical path. Therefore, the light from both photomultipliers does not need to arrive exactly at the same time, which can have a significantly negative effect on the evaluation of the read data.

NOLAN MATTHEWS ET AL: "Development of a Digital Astronomical Intensity Interferometer: laboratory tests with thermal light", ARXIV.ORG, CORNELL UNIVERSITY LIBRARY, 201 OLIN LIBRARY CORNELL UNIVERSITY ITHACA, NY 14853, 18 August 2017 (2017-08-18), DOI: 10.1080/09500340.2017.1360958, discloses a digital astronomical intensity interferometer comprising a narrow-band filter, a beam splitter, two rotatable linear polarizers and two photo-multiplier tubes.

The HESS project (https://doi.org/10.1063/1.2896923) uses a special board mounted on the front of the camera, featuring a 45-degree mirror, one central photomultiplier and a circle of six signal reading photomultipliers. This project does not use a beam splitter, and all seven photomultipliers read the same signal. These seven photomultipliers effectively act as one. Another project published the detection of a correlation signal from three starts: MAGIC, equipped with two telescopes of 17 m diameter (http://arxiv.org/pdf/1911.06029.pdf, V. Acciari et al., Optical intensity interferometry observations using the MAGIC imaging atmospheric Cherenkov telescopes). The central photomultoplier of each camera was used and continuously readout. This was previously attempted with similar approach [https://arxiv.org/abs/astro-ph/9805184, F. Lucarelli, The Central Pixel of the MAGIC Telescope for Optical Observations, Nucl. Instr. Meth. Phys. Res. A, 589, 415 (2008)] uses one central photomultiplier of the camera, with a simple lens. The project only uses one photomultiplier, so it does not use an optical beam splitter and polarizers at all.

The possibility to use polarizers enables accurate verification that the phenomenon is not simulated by the backgrounds, since correlation should be expected only when, once the beam is split into two, polarizing axes are parallel.

A solution according to the US5828489 dossier (Narrow Wavelength Polarizing Beam splitter) is also known in the area of polarizing beam splitters, where the polarizing beam splitter splits the input beam into two output beams, with one having the same direction as the input beam and the other one perpendicular to the input beam direction. Both output beams are non-polarized and moreover the polarizing ability of this beam splitter is strongly dependent on the angle of incidence, which is disadvantageous. According to the solution described in the US5808798 dossier (Nonpolarizing Beam splitter), the beam splitter has unpolarized beams at the output, which again is inconvenient for evaluation purposes. Another not entirely optimal case is described in the WO2019028078 dossier (Hexahedral Polarizing Beam splitter), where the polarizing beam splitter splits the input beam into two output ones, where the propagation directions are perpendicular to the input beam and have mutually opposite directions, and in addition the polarizing capability of the beam splitter is strongly dependent on the angle of incidence, which is disadvantageous. The polarizing beam splitter described in the US4565426 dossier (Beam Splitter) splits the input beam into two output ones, where the directions of propagation of the input and output beams are identical. However, this solution does not make it possible to change the polarizing characteristics of the light beams in individual branches, and thus change the combinations of the light polarization (S↔, P↕) or (S↔, S↔). This polarizing beam splitter is not compact and does not allow its use in the Cherenkov telescope camera. The polarizing beam splitter described in the US4492436 dossier (Polarization Independent Beam Splitter) splits the input beam into two output ones which are unpolarized; the output beams have different directions compared to input beams. The polarizing beam splitter according to the CA2059553 dossier (Birefringent Polarizing Device) splits the narrow input beam into two narrow output beams that are polarized (S↔, P↕); the output beams have the same directions but cannot change the light polarization combination to (S↔, S↔). The solution according to the US6141101 dossier (Monolithic Optical Assembly) is a very complex monolithic system setup used in a Fourier-transform spectrometer for beam splitting and maintaining the effect of interference strips. It is built into a specific device and is not usable in SII. The TW200538764 dossier (Beam splitter for High-power Radiation) describes a high light output beam splitter, which is not applicable in SII, which in turn must operate with a low light output, and the beam splitter according to US2014219608 (Optical Power Splitters) has optical fibres at its input and output , which is again unsuitable for use in an atmospheric Cherenkov detector, because here the beams passing through free space must be split.

It is the objective of the submitted invention to present a new design of a polarizing optical separator for SII, intended for use in an atmospheric Cherenkov detector, which is monolithic and compact, wherein the optical setups and the polarizing members are bonded together, and the polarizing ability of the beam splitter is not dependent on the angle of incidence of the input beams. Furthermore, it has the property of the optical path in both branches being identical, with the changeable combination of the polarization in these two branches to (S↔, P↕) or (S↔, S↔).

### Principle of the invention

The defined objective is achieved by the invention which is a polarizing optical separator for stellar intensity interferometry according to claim 1.

In a preferred design, the polarizing optical separator comprises a narrowband optical filter for filtering a non-polarized convergent light beam from the observed object wherein said narrowband optical filter is arranged on the path of the incident input beam prior entry to the beam splitter of the fixed optical setup. This means that the beam splitter is preceded by the narrowband optical filter . The individual parts of the fixed optical setup and the rotatable optical setup are mutually bonded or vacuum sucked together and the detectors are formed by photomultipliers.

The invention achieves a new and higher effect by providing a monolithic compact system of two optical setups allowing to accurately evaluate the non-polarized convergent beam from the observed object, which is focused by the Cherenkov telescope, the directions of propagation of the input and output beams is the same, which is guaranteed by the design of the beam splitter the polarizing ability of which is not dependent on the angle of incidence of the light beam. The light incident on the used photomultipliers travels the same optical path, thus arriving exactly at the same time, with a precision of tens of picoseconds, which makes it possible to evaluate the signal with more accuracy. Another advantage is the possible rotation of the polarizer, which also has a significant effect on the results of the evaluation of the incident light beam.

### Explanation for images

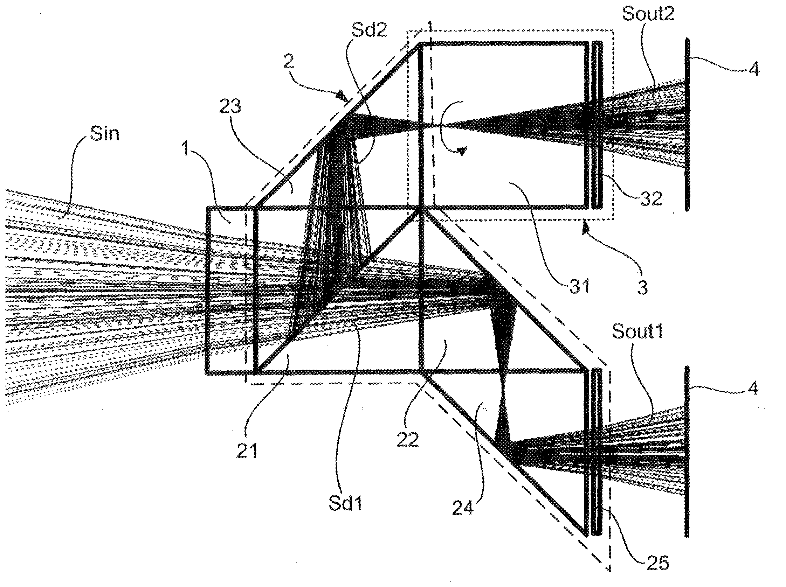

A specific example of the application of the invention is schematically shown in the accompanying drawing, representing a diagram of a basic design of the separator with an indication of the light beam path simulation.

### Examples of the invention

The basic design of the polarizing optical separator consists of a narrowband optical filter 1 of the non-polarized convergent light beam from the observed object, followed by a fixed optical setup 2 formed by a beam splitter 21, fitted or better bonded to which are - in the direction of the input beam Sin - the primary mirror prism 22 and - in the direction perpendicular to the input beam Sin - the deflecting mirror prism 23. The primary mirror prism 22 is followed, in the direction of the output of the first split beam Sd1, by the secondary mirror prism 24 fitted on the output surface with the first polarizer 25. A rotatable optical setup 3 is rotatably fitted to the deflecting mirror prism 23 in the direction of the output of the second split beam Sd2, which is formed by a transitive prism 31 provided on the output surface with a second polarizer 32. Both the fixed optical setup 2 and the rotatable optical setup 3 are provided, in the direction of the path of the first output beam Sout1 and the second output beam Sout2, with detectors 4 preferably formed by photomultipliers which are part of a non-represented reading device, for example a Cherenkov telescope camera.

During observation, a non-polarized convergent input beam Sin arrives at the described separator, i.e. the light from the observed object, which is focused on the non-represented Cherenkov telescope. In the beam splitter 21, the input beam Sin is split into two beams, i.e. the first split beam Sd1 and the second split beam Sd2, which have, after reflection on the mirror prisms 22 and 24 or 23, the same propagation direction as the arriving input beam Sin. Both branches of the split output beams Sd1 and Sd2 are then polarized in polarizers 25 and 32. These two output polarized beams (Sout1 and Sout2) subsequently strike on two different detectors 4. In one branch, forming the rotatable optical setup 3, the transitive prism 31 with the second polarizer 32 can be rotated, thus enabling the detection of two combinations of the polarization of the light of output beams Sout1, Sout2 for combinations (S↔, P↕) or (S↔, S↔). The optical path of split light output beams Sd1 and Sd2 in both separator arms is exactly the same, thanks to the selected combination of the reflective mirror prisms 22 and 24 of fixed optical setup 2 or the deflecting mirror prism 23 and the transitive prism 32 of the rotatable optical setup 3, with the accuracy of dozens of picoseconds, which significantly improves the signal processing quality.

The described design of the separator is not the only possible solution according to the invention, but for certain measurements the separator does not need to be fitted with an optical filter 1 at the input. The individual parts of the optical setups 2 and 3 do not need to be bonded together but can be vacuum sucked together. In an example not covered by the subject-matter of the claims, the reflecting prisms can be replaced with mirrors, where the sufficient rigidity of the system must be achieved using other mechanical parts.

### Industrial usability

The polarizing optical separator for stellar intensity interferometry according to the invention is designed especially for use in atmospheric Cherenkov telescopes and because this is interferometry, it is necessary to have at least two telescopes of the same type fitted with this separator, but it can also be used in other telescopes adapted for this type of observation and featuring a digital camera, sufficiently fast detectors and a sufficiently large optical collective surface. It can also be adopted for other applications looking at single photon correlation from a common source of incoherent light. For instance, the experiment Alice in LHC looked at the same phenomenon from a plasma produced after ion collision (see e.g. J-W. Pan et al, Multi-photon entanglement, https://arxiv.org/pdf/0805.2853.pdf).

### List of reference symbols

- 1: Optical filter
- 2: Fixed optical setup
- 21: Beam splitter
- 22: Primary mirror prism
- 23: Deflecting mirror prism
- 24: Secondary mirror prism
- 25: First polarizer
- 3: Rotatable optical setup
- 31: Transitive prism
- 32: Second polarizer
- 4: Detector
- Sin: Input beam
- Sd1: First split beam
- Sd2: Second split beam
- Sout1: First output beam
- Sout2: Second output beam

## Claims

1. A polarizing optical separator for stellar intensity interferometry, **wherein** it comprises a fixed optical setup (2) , a rotatable optical setup (3) and detectors (4), where the fixed optical setup (2) is formed by a beam splitter (21), a primary mirror prism (22), a deflecting mirror prism (23), a secondary mirror prism (24) and a first polarizer (25) so that the primary mirror prism (22) is attached to the beam splitter (21) in a direction of the incident input beam (Sin) and the deflecting mirror prism (23) is attached to the beam splitter (21) in a direction perpendicular to the incident input beam (Sin), where the primary mirror prism (22) is followed in a direction of an output of a first split beam (Sd1) by the secondary mirror prism (24) fitted with the first polarizer (25) on an output surface, and where the rotatable optical setup (3) is formed by a transitive prism (31) provided with a second polarizer (32) on an output surface and it is rotatably attached to the deflecting mirror prism (23) in a direction of an output of a second split beam (Sd2), where the fixed optical setup (2) and the rotatable optical setup (3) are followed by the detectors (4) in a direction of a path of a first output beam (Sout1) and a second output beam (Sout2), wherein the combination of the primary mirror prism (22) and the secondary mirror prism (24) of the fixed optical setup (2) or the deflecting mirror prism (23) and the transitive prism (31) of the rotatable optical setup (3) are selected so that the optical path of the split output beams (Sd1) and (Sd2) in both separator arms are identical.

2. The polarizing optical separator according to claim 1, **wherein** it further comprises a narrowband optical filter (1) for filtering a non-polarized convergent light beam from the observed object, wherein said narrowband optical filter (1) is arranged on the path of the incident input beam (Sin) prior entry to the beam splitter (21).

3. The polarizing optical separator according to claim 1 or 2, **wherein** individual parts of the fixed optical setup (2) and the rotatable optical setup (3) are bonded or vacuum sucked together.

4. The polarizing optical separator according to any of claims 1 to 3, **wherein** the detectors (4) are formed by photomultipliers.

## Patentansprüche

1. Ein polarisierender optischer Separator für stellare Intensitätsinterferometrie, wobei er einen festen optischen Aufbau (2); einen drehbaren optischen Aufbau (3); und Detektoren (4) umfasst, wobei der feste optische Aufbau (2) durch einen Strahlteiler (21); ein Primärspiegelprisma (22); ein Umlenkspiegelprisma (23); ein Sekundärspiegelprisma (24); und einen ersten Polarisator (25) gebildet ist, so dass das Primärspiegelprisma (22) in einer Richtung des einfallenden Eingangsstrahls (Sin) am Strahlteiler (21) angebracht ist und das Umlenkspiegelprisma (23) in einer Richtung senkrecht zum einfallenden Eingangsstrahl (Sin) am Strahlteiler (21) angebracht ist, wo das Primärspiegelprisma (22) in einer Richtung einer Ausgabe eines ersten Teilstrahls (Sd1) von dem Sekundärspiegelprisma (24), das mit dem ersten Polarisator (25) auf einer Ausgangsfläche versehen ist, gefolgt wird, und wo der drehbare optische Aufbau (3) durch ein Transitivprisma (31) gebildet ist, das mit einem zweiten Polarisator (32) auf einer Ausgangsfläche versehen ist, und er am Umlenkspiegelprisma (23) in einer Richtung einer Ausgabe eines zweiten Teilstrahls (Sd2) drehbar angebracht ist, wo der feste optische Aufbau (2) und der drehbare optische Aufbau (3) in einer Richtung eines Wegs eines ersten Ausgangsstrahls (Sout1) und eines zweiten Ausgangsstrahls (Sout2) von den Detektoren (4) gefolgt werden, wobei die Kombination des Primärspiegelprismas (22) und des Sekundärspiegelprismas (24) des festen optischen Aufbaus (2) oder des Umlenkspiegelprismas (23) und des Transitivprismas (31) des drehbaren optischen Aufbaus (3) so gewählt ist, dass der optische Weg der Teilausgangsstrahlen (Sd1) und (Sd2) in beiden Separatorarmen identisch ist.

2. Der polarisierende optische Separator nach Anspruch 1, wobei er ferner einen schmalbandigen optischen Filter (1) zum Filtern eines nicht polarisierten konvergenten Lichtstrahls vom beobachteten Objekt umfasst, wobei der schmalbandige optische Filter (1) auf dem Weg des einfallenden Eingangsstrahls (Sin) vor dem Eintritt in den Strahlteiler (21) angeordnet ist.

3. Der polarisierende optische Separator nach Anspruch 1 oder 2, wobei einzelne Teile des festen optischen Aufbaus (2) und des drehbaren optischen Aufbaus (3) miteinander verbunden oder vakuumgesaugt sind.

4. Der polarisierende optische Separator nach einem der Ansprüche 1 bis 3, wobei die Detektoren (4) durch Photovervielfacher gebildet sind.

## Revendications

1. Un séparateur optique polarisant pour interférométrie d'intensité stellaire, où il comprend un montage optique fixe (2) ; un montage optique rotatif (3) ; et des détecteurs (4), où le montage optique fixe (2) est formé par un séparateur de faisceau (21) ; un prisme miroir primaire (22) ; un prisme miroir déflecteur (23) ; un prisme miroir secondaire (24) ; et un premier polariseur (25) de telle sorte que le prisme miroir primaire (22) est fixé au séparateur de faisceau (21) dans une direction du faisceau d'entrée incident (Sin) et le prisme miroir déflecteur (23) est fixé au séparateur de faisceau (21) dans une direction perpendiculaire au faisceau d'entrée incident (Sin), où le prisme miroir primaire (22) est suivi dans une direction d'une sortie d'un premier faisceau divisé (Sd1) par le prisme miroir secondaire (24) pourvu du premier polariseur (25) sur une surface de sortie, et où le montage optique rotatif (3) est formé par un prisme transitif (31) pourvu d'un second polariseur (32) sur une surface de sortie et il est fixé de manière rotative au prisme de miroir déflecteur (23) dans une direction d'une sortie d'un second faisceau divisé (Sd2), où le montage optique fixe (2) et le montage optique rotatif (3) sont suivis par les détecteurs (4) dans une direction d'un trajet d'un premier faisceau de sortie (Sout1) et d'un second faisceau de sortie (Sout2), où la combinaison du prisme miroir primaire (22) et du prisme miroir secondaire (24) du montage optique fixe (2) ou du prisme miroir déflecteur (23) et du prisme transitif (31) du montage optique rotatif (3) est sélectionnée de telle sorte que le trajet optique des faisceaux de sortie divisés (Sd1) et (Sd2) est identique dans les deux bras de séparateur.

2. Le séparateur optique polarisant selon la revendication 1, où il comprend en outre un filtre optique à bande étroite (1) pour filtrer un faisceau lumineux convergent non-polarisé à partir de l'objet observé, où le filtre optique à bande étroite (1) est disposé sur le trajet du faisceau d'entrée incident (Sin) avant l'entrée dans le séparateur de faisceau (21).

3. Le séparateur optique polarisant selon la revendication 1 ou 2, où des parties individuelles du montage optique fixe (2) et du montage optique rotatif (3) sont liées ou aspirées sous vide ensemble.

4. Le séparateur optique polarisant selon l'une quelconque des revendications 1 à 3, où les détecteurs (4) sont formés par des photomultiplicateurs.
